# EUROPÄISCHE PATENTSCHRIFT

(11) **EP 0 516 807 B1**
(45) Veröffentlichungstag und Bekanntmachung des Hinweises auf die Patenterteilung: **13.03.1996**
(21) Anmeldenummer: 92902537.7
(22) Anmeldetag: 15.11.1991
(51) Int. Cl.: H02P 6/14

(54) **SCHALTUNGSANORDNUNG ZUM BETREIBEN EINES MEHRPHASEN-SYNCHRONMOTORS AN EINEM GLEICHSPANNUNGSNETZ**
CIRCUIT FOR RUNNING A MULTI-PHASE SYNCHRONOUS MOTOR FROM A D.C. POWER SUPPLY
CIRCUIT POUR L'EXPLOITATION D'UN MOTEUR SYNCHRONE POLYPHASE AVEC UN RESEAU A COURANT CONTINU

(30) Priorität: 20.12.1990 DE 4040926
(43) Veröffentlichungstag der Anmeldung: 09.12.1992
(73) Patentinhaber: ROBERT BOSCH GMBH, D-70442 Stuttgart (DE)
(72) Erfinder: WEHBERG, Josef, D-7580 Bühl (DE)
(86) Internationale Anmeldenummer: DE9100884
(87) Internationale Veröffentlichungsnummer: WO9211689

(56) Entgegenhaltungen:
- EP-A- 0 363 169
- FR-A- 2 655 787
- EDN ELECTRICAL DESIGN NEWS. Bd. 32, Nr. 18, 3. September 1987, NEWTON, MASSACHUSETTS US Seiten 227 - 234; ARTUSI D. ET AL.: 'SOLID-STATE DEVICES EASE TASK OF DESIGNING BRUSHLESS DC MOTORS' siehe Abbildungen 1,3,4
- CONFERENCE PROCEEDINGS 1989 13. März 1989, BALTIMORE,MARYLAND Seiten 81 - 90; T.M. JAHNS ET AL.: 'INTEGRATED CURRENT REGULATION FOR A BRUSHLESS ECM DRIVE' siehe Zusammenfassung; Abbildung 1
- SIEMENS ZEITSCHRIFT. Bd. 46, Nr. 4, April 1972, ERLANGEN DE Seiten 274 - 276; M.LISKA: 'SIMOTRON K, drehzahlgeregelte Kleinantriebe mit Elektronikmotoren für industrielle Anwendungen' siehe Seite 276, Spalte 1; Abbildung 2

## Beschreibung

### Stand der Technik

Die Erfindung geht aus von einer Schaltungsanordnung zum Betreiben eines Synchronmotors mit mehrphasiger Ankerwicklung an einem Gleichspannungsnetz der im Oberbegriff des Anspruchs 1 definierten Gattung.

EDN Electrical Design News, Bd. 32, Nr. 18, 3.9.87, Newton, Massachusetts, US, Seiten 227-234, Antusi D. et al. : "Solid-state devices ease task of designing brushless Motors" offenbart eine Schaltungsanordnung mit den Merkmalen des Oberbegriffs des Anspruchs 1.

Bei einer weiteren bekannten Schaltungsanordnung dieser Art für einen dreiphasigen Synchronmotor, die nach dem Prioritätsdatum der vorliegenden Anmeldung veröffentlicht wurde (DE 39 40 56.9) sind zwecks Reduzierung des Kommutierungsgeräusches und der Funkstörung die Schaltsignale so ausgebildet, daß jeweils die beiden Schaltsignale für die den kommutierenden Wicklungsphasen zugeordneten Halbleiterschalter einander zeitlich überlappen. Eines der beiden Schaltsignale wird dabei im Überlappungsbereich derart getaktet, daß der Mittelwert des Strangstroms in der aufkommutierenden Wicklungsphase zunimmt und in der abkommutierenden Wicklungsphase abnimmt, und zwar linear oder nach einer e-Funktion. Diese Art der Kommutierung erfordert jedoch einen relativ hohen Schaltungsaufwand.

### Vorteile der Erfindung

Die erfindungsgemäße Schaltungsanordnung mit den kennzeichnenden Merkmalen des Anspruchs 1 hat demgegenüber den Vorteil des geringen schaltungstechnischen Aufwandes bei relativ geringem Kommutierungsgeräusch und sehr geringer Funkstörung, die zusätzliche Entstörungsmaßnahmen überflüssig macht. Bei der Kommutierung, d.h. beim Übergang des Stromes von der einen zu der anderen Wicklungsphase, wirkt sich die analoge Steuerung der Halbleiterschalter positiv in der Weise aus, daß nur eine geringe Stromsteilheit auftritt. Diese wiederum verursacht nur geringfügige Überspannungen, so daß Freilaufdioden und Spannungsbegrenzer entfallen können. Durch das Fehlen der steilen Schaltflanken treten kaum Funkstörungen auf und wird auch das Kommutierungsgeräusch merklich reduziert.

Durch die in den weiteren Ansprüchen aufgeführten Maßnahmen sind vorteilhafte Weiterbildungen und Verbesserungen der im Anspruch 1 angegebenen Schaltungsanordnung möglich.

Gemäß einer bevorzugten Ausführungsform der Erfindung wird das Referenzsignal als Spannungsabfall an einem Widerstand abgegriffen, der von dem Phasensummenstrom der Ankerwicklung durchflossen ist, und geeignet verstärkt.

Die erfindungsgemäße Schaltungsanordnung kann für Synchronmotoren verwendet werden, bei welchen die Wicklungsphasen der Ankerwicklung in Stern geschaltet sind, unabhängig davon, ob der Sternpunkt herausgeführt ist oder nicht.

Bei herausgeführtem Sternpunkt läßt sich eine sog. Halbwellensteuerung realisieren, wenn gemäß einer Ausführungsform der Erfindung jeweils ein Halbleiterschalter in Reihe mit einer Wicklungsphase geschaltet wird und die parallelen Reihenschaltungen einerseits über den Sternpunkt und andererseits über den Widerstand zur Erfassung des Wicklungs-Summenstroms an der Netzgleichspannung liegt.

Eine sog. Vollwellensteuerung läßt sich erreichen, wenn gemäß einer weiteren Ausführungsform der Erfindung jeweils zwei Halbleiterschalter in Reihe geschaltet sind und an ihrem Verbindungspunkt jeweils eine Wicklungsphase der Ankerwicklung angeschlossen ist. Dabei ergibt sich eine Anzahl von parallelen Reihenschaltungen, die der Zahl der Wicklungsphasen oder -stränge entspricht. Die parallelen Reihenschaltungen sind gemeinsam über den Widerstand zum Erfassen des Summenstroms in der Ankerwicklung an die Netzgleichspannung gelegt. Bei dieser Vollwellensteuerung ergibt sich eine höhere Ausnutzung des Motors. Die Phasenzahl der Ankerwicklung unterliegt keiner Einschränkung. Bei einer Dreiphasenwicklung kann die Ankerwicklung auch in Dreieck geschaltet werden.

In einer bevorzugten Ausführungsform der Erfindung wird als Differenzbildner ein Operationsverstärker, genauer ein Differenzverstärker, und als Halbleiterschalter ein Leistungs- MOS-Feldeffekttransistor (Leistungs-MOSFET) verwendet. Dadurch ergibt sich eine leistungsarme Transistoransteuerung.

Gemäß einer weiteren Ausführungsform der Erfindung sind die Flanken der periodischen Rechteckimpulse, aus welchen die Schaltsignale zusammengesetzt sind, unter einem Winkel kleiner 90° geneigt, wodurch die Anstiegsflanken der Rechteckimpule des Schaltsignals, das der in der Stromführung nachfolgenden Wicklungsphase der Ankerwicklung zugeordnet ist, und die Abfallflanken der Rechteckimpulse des Schaltsignals, das der in der Stromführung vorausgehenden Wicklungsphase zugeordnet ist, einander zeitlich überlappen. Durch diese Ausbildung der Schaltsignale läßt sich noch eine deutlichere Reduzierung des Kommutierungsgeräusches erzielen.

Gemäß einer weiteren Ausführungsform der Erfindung sind die Amplituden der Schaltsignale drehzahlbegrenzt, was mit einem als P- oder PI-Regler ausgebildeten Drehzahlregler realisiert werden kann. Die Istdrehzahl wird dabei aus den Schaltsignalen abgeleitet.

### Zeichnung

Die Erfindung ist anhand von in der Zeichnung dargestellten Ausführungsbeispielen in der nachfolgenden Beschreibung näher erläutert. Es zeigen:
- Fig. 1: ein Schaltbild einer Schaltungsanordnung zum Betreiben eines dreiphasigen Synchronmotors mit elektronischer Kommutierung (EC-Motor) an einem Gleichspannungsnetz,
- Fig. 2: ein Schaltbild von Differenzbildner und Halbleiterschalter in der Schaltungsanordnung gemäß Fig. 1,
- Fig. 3: ein Diagramm verschiedener Signale in der Schaltungsanordnung gemäß Fig. 1,
- Fig. 4: ein Schaltbild einer Schaltungsanordnung zum Betreiben eines dreiphasigen EC-Motors gemäß einem weiteren Ausführungsbeispiel.

### Beschreibung der Ausführungsbeispiele

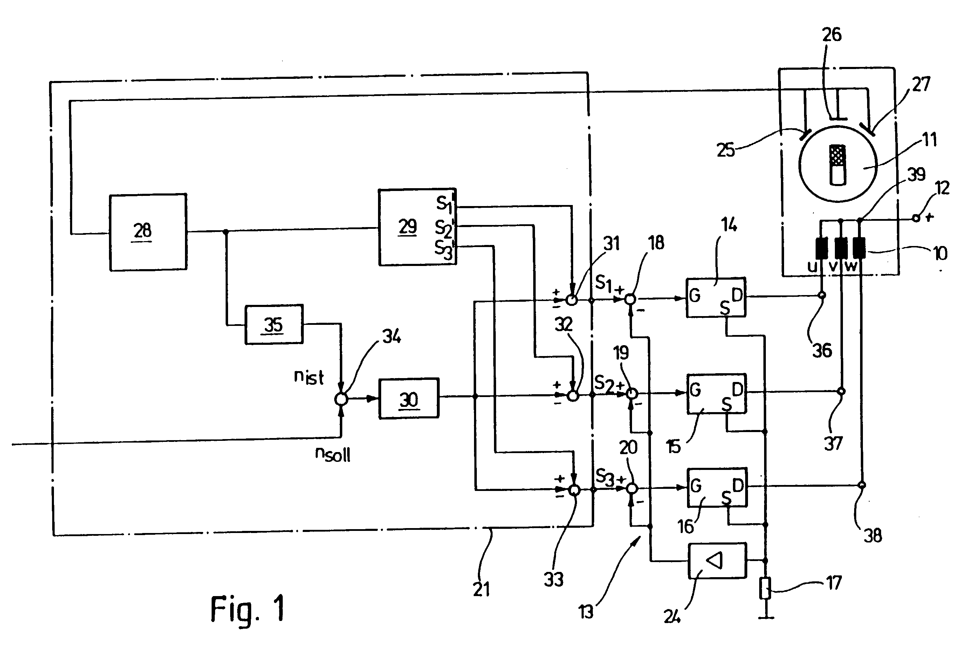

In dem in Fig. 1 dargestellten Schaltbild ist mit 10 die dreiphasige Ankerwicklung des Synchronmotors bezeichnet, die mit ihren Wicklungssträngen oder Wicklungsphasen u,v,w im Ständer des Synchronmotors untergebracht ist. Der als Permanentmagnetrotor ausgebildete Läufer ist mit 11 bezeichnet. Er ist hier symbolisch zweipolig dargestellt, kann aber auch eine andere Polzahl aufweisen. Die Wicklungsphasen u,v,w sind an dem einen Wicklungsende zu einem Sternpunkt 39 zusammengefaßt, der aus dem Synchronmotor herausgeführt ist und an dem positiven Potential "+" des Gleichspannungsnetzes 12 angeschlossen ist. Die drei freien, auf einem Klemmenbrett liegenden Wicklungsanschlüsse 36,37,38 der drei Wicklungsphasen u,v,w sind mit einer Schaltvorrichtung 13 verbunden, die an dem anderen Potential des Gleichspannungsnetzes liegt.

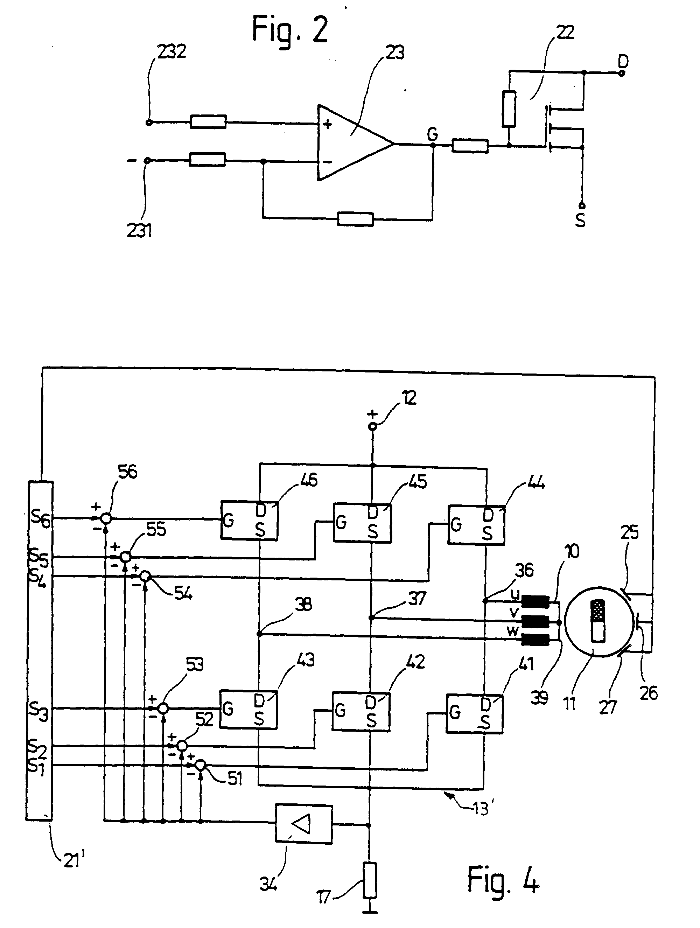

Die Schaltvorrichtung 13 weist drei schematisch dargestellte Leistungstransistoren 14,15,16 auf, die jeweils in Reihe mit einer Wicklungsphase u,v,w liegen. Wie in Verbindung mit Fig. 2 ersichtlich ist, ist jeder Leistungstransistor 14 - 16 von einem Leistungs-MOSFET 22 gebildet, dessen Drain D an der zugeordneten Wicklungsphase u bzw. v bzw. w und dessen Source S über einen Widerstand 17 an dem unteren Potential des Gleichspannungsnetzes 12 liegt. Dabei sind die Sourcen S aller Leistungs-MOSFET 22 über denselben Widerstand 17 an dem Gleichspannungsnetz 12 angeschlossen. Die Leistungstransistoren 14,15,16 werden von Differenzbildnern 18,19,20 gesteuert denen einerseits ein aus dem Summenstrom der Ankerwicklung 10 abgeleitetes Referenzsignal und andererseits Schaltsignale zugeführt werden, die von einer Kommutierungsvorrichtung 21 in Abhängigkeit von der Rotordrehstellung generiert werden. Jeder Differenzbildner 18 - 20 ist gemäß Fig. 2 von einem Differenzverstärker 23 gebildet, dessen Ausgang mit dem Gate G des Leistungs-MOSFET 22 verbunden ist. Das Referenzsignal ist dabei an den invertierenden Eingang 231 und das Schaltsignal an den nicht invertierenden Eingang 232 des Differenzverstärkers 23 gelegt. Zur Gewinnung des Referenzsignals wird der Spannungsabfall am Widerstand 17 abgegriffen, mit einem Verstärker 24 in eine ausreichend hohe Spannung umgesetzt und an die invertierenden Eingänge 231 der drei Differenzverstärker 23 gelegt.

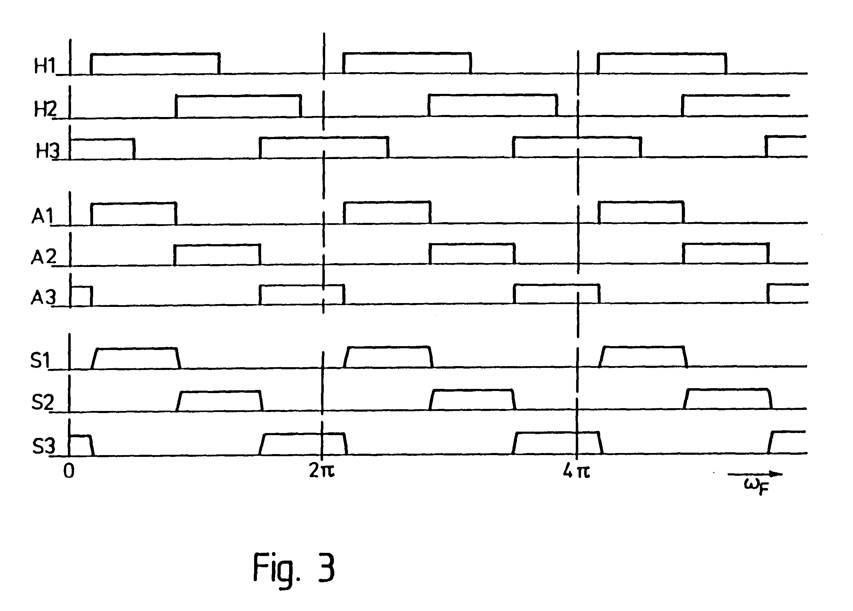

Die in der Kommutierungsvorrichtung 21 erzeugten Schaltsignale sind in Fig. 3 dargestellt und dort - wie in Fig. 1 - mit S1,S2 und S3 bezeichnet. Jeweils eines der drei Schaltsignale S1 - S3 liegt an dem nicht invertierenden Eingang 231 der jeweils als Differenzverstärker 23 ausgebildeten Differenzbildner 18 - 20. Zur Erzeugung der Schaltsignale sind am Rotorumfang drei feststehende, um gleiche Umfangswinkel gegeneinander versetzte Positionssensoren 25,26,27 angeordnet, die entsprechend der Drehstellung des Läufers 11 Ausgangssignale H1,H2 und H3 erzeugen. Diese Ausgangssignale der Positionssensoren 25 - 27 sind in Fig. 3 oben dargestellt. In einer Gatterschaltung 28 werden diese drei Ausgangssignale H1,H2 und H3 in ein Dreiphasensignal A1,A2,A3 ohne Überlappung mit einer Teilung von 2π/3 umgeformt. Das Dreiphasensignal A1,A2,A3 wird einem Block 29 zugeführt, welcher die Steilheit der Rechteckimpulse begrenzt. Am Ausgang des Blocks 29 stehend die drei Schaltsignale S1',S2',S3' an, von denen jedes aus einer Folge periodischer Rechteckimpulse zusammengesetzt ist, deren ansteigenden bzw. abfallenden Flanken mit einem Winkel kleiner 90° verlaufen. Da die drei Schaltsignale S1',S2',S3' wie das Dreiphasensignal A1,A2,A3 gegeneinander um 2π/3 verschoben sind, überlappen sich die Anstiegsflanken der Rechteckimpulse des Schaltsignals, das der in der Stromführung nachfolgenden Wicklungsphase der Ankerwicklung 10 zugeordnet ist, und die Abfallflanken der Rechteckimpulse des Schaltsignals, das der in der Stromführung vorausgehenden Wicklungsphase der Ankerwicklung 10 zugeordnet ist, einander zeitlich. Diese Schaltsignale S1',S2',S3', die im wesentlichen den im Diagramm unten dargestellten Schaltsignalen S1 - S3 am Ausgang der Kommutierungsschaltung 21 entsprechen, könnten nunmehr unmittelbar den nicht invertierenden Eingängen 232 der drei Differenzverstärker 23 zugeführt werden. Bei der hier verwendeten Kommutierungsvorrichtung 21 werden die Schaltsignale S1' - S3' noch zusätzlich in Abhängigkeit von der Drehzahl begrenzt. Hierzu sind die Schaltsignale S1',S2',S3' drei Differenzbildnern 31,32,33 zugeführt, welche von den Amplituden der Schaltsignale S1',S2',S3' einen von einem Drehzahlregler 30 ausgegebenen Wert subtrahieren, so daß am Ausgang der Kommutierungsvorrichtung 21 nunmehr die Schaltsignale S1,S2 und S3 anstehen, die jeweils einem der drei Differenzbildnern 18 - 20 zugeführt werden. der Drehzahlregler 30 ist als P- oder PI-Regler ausgebildet, dem die Differenz aus einem vorgegebenen Drehzahl-Sollwert nₛₒₗₗ und aus einem gemessenen Drehzahl-Istwert nᵢₛₜ zugeführt wird. Hierzu ist dem Drehzahlregler 30 ein weiterer Differenzbildner 34 vorgeschaltet, an dem einerseits der Drehzahl-Sollwert nₛₒₗₗ und andererseits der Drehzahl-Istwert nᵢₛₜ liegt. Der Drehzahl-Istwert nᵢₛₜ wird in einem Block 35 durch Flankenauswertung der Signale A1 - A3 ermittelt.

Bei der in Fig. 4 dargestellten Schaltungsanordnung ist der Sternpunkt 39 der in Stern geschalteten dreiphasigen Ankerwicklung 10 nicht zugänglich, sondern nur die drei auf ein Klemmbrett gelegten Wicklungsanschlüsse 36,37,38. Hier weist die Schaltvorrichtung 13' insgesamt sechs als Leistungs-MOSFET 22 gemäß Fig. 2 ausgebildete Leistungstransistoren 41 - 46 auf, von denen jeweils zwei Leistungstransistoren 41,44 bzw. 42,45 bzw. 43,46 in Reihe geschaltet sind. Ihr gemeinsamer Verbindungspunkt ist jeweils auf einen der Wicklungsanschlüsse 36 - 38 gelegt. Alle drei Reihenschaltungen der Leistungstransistoren 41 - 46 sind parallel geschaltet, und die Parallelschaltung ist über den Widerstand 17 an das Gleichspannungsnetz 12 angeschlossen. Dabei sind die Drain D mit dem positiven Pol "+" des Gleichspannungsnetzes 12 und die Sourcen S mit dem Widerstand 17 verbunden, der an dem negativen Pol des Gleichspannungsnetzes 12 liegt. Jedem Gate G ist wiederum ein Differenzbildner 51 - 56 vorgeschaltet, der wie in Fig. 2 als Differenzverstärker 23 ausgeführt ist. In gleicher Weise wie in Fig. 1 und 2 ist den invertierenden Eingängen 231 der Differenzbildner 51 - 56 der am Widerstand 17 abgegriffene und durch den Verstärker 24 geeignet verstärkte Spannungsabfall und sind den nicht invertierenden Eingängen 232 die Schaltsignale S1 - S6 der Kommutierungsvorrichtung 21' zugeführt. In dieser Schaltungsanordnung ist eine sog. Vollwellensteuerung des EC-Motors im Gegensatz zu der in der Schaltungsanordnung gemäß Fig. 1 durchgeführten Halbwellensteuerung realisiert. Mit dieser Vollwellensteuerung geht eine höhere Ausnutzung des EC-Motors einher. Bei einer dreiphasigen Ankerwicklung 10 können die Wicklungsstränge oder Wicklungsphasen u,v,w auch in Dreieck geschaltet werden. Die Kommutierungsvorrichtung 21' liefert insgesamt sechs Schaltsignale S1 - S6, die von den Ausgangssignalen H1 - H3 der Positionssensor 25 - 27 abgeleitet sind, wobei die Schaltsignale S1 - S6 in geeigneter Weise gegeneinander zeitlich verschoben sind, so daß zur Durchführung der Vollwellensteuerung jeweils zwei der Leistungstransistoren 41 - 46 gleichzeitig leitend sind und diese beide Leistungstransistoren 41 - 46 nacheinander jeweils in Verbindung mit einem weiteren Leistungstransistor kommutiert werden.

Die Erfindung ist nicht auf die vorstehend beschriebenen Ausführungsbeispiele beschränkt. Insbesondere unterliegt die Phasenzahl der Ankerwicklung keinerlei Einschränkung.

Anstelle der Gewinnung der Schaltsignale aus den Positionssensoren können die Schaltsignale auch durch sensorlose Positionserkennung des Rotors gewonnen werden, welche die in der Ankerwicklung induzierte Spannung ausnutzt. Eine solche sensorlose Positionserkennung ist beispielsweise in der DE 30 42 819 A1 beschrieben.

## Patentansprüche

1. Schaltungsanordnung zum Betreiben eines Synchronmotors mit mehrphasiger Ankerwicklung (10) an einem Gleichspannungsnetz, mit einer Schaltvorrichtung (13) zum sukkzessiven Anschließen der Wicklungsphasen der Ankerwicklung an die Netzgleichspannung, die eine Mehrzahl von den einzelnen Wicklungsphasen zugeordneten Halbleiterschaltern (14, 15, 16) aufweist, und mit einer Kommutierungsvorrichtung (29) zum folgerichtigen Ansteuern der Halbleiterschalter mit Schaltsignalen in Übereinstimmung mit der Rotordrehstellung des Synchronmotors, dadurch gekennzeichnet, daß jedem Steuereingang (G) der Halbleiterschalter (14-16;41-44) ein analoger Differenzbildner (18-20;51-56) vorgeschaltet ist, dem einerseits das dem Halbleiterschalter (14-16;41-46) zugeordnete Schaltsignal (S1-S3;S1-S6) und andererseits ein aus dem Phasensummenstrom der Ankerwicklung (10) abgeleitetes Referenzsignal zugeführt ist, und daß die Ansteuerung der Halbleiterschalter (14-16;41-46) durch die Differenzbildner (18-20;51-56) so getroffen ist, daß die Halbleiterschalter (14-16;41-46) voll durchgeschaltet sind, solange die Amplitude des Schaltsignals (S1-S3;S1-S6) größer ist als die Amplitude des Referenzsignals.

2. Schaltungsanordnung nach Anspruch 1, dadurch gekennzeichnet, daß das Referenzsignal aus dem an einem vom Phasensummenstrom der Ankerwicklung (10) durchflossenen Widerstand (17) abgegriffenen Spannungsabfall durch geeignete Verstärkung gebildet ist.

3. Schaltungsanordnung nach Anspruch 2 für einen Synchronmotor mit herausgeführtem Sternpunkt der im Stern geschalteten Ankerwicklung, dadurch gekennzeichnet, daß jeweils ein Halbleiterschalter (14-16) in Reihe mit einer Wicklungsphase (u,v,w) der Ankerwicklung (10) geschaltet ist und daß die parallelen Reihenschaltungen einerseits über den Sternpunkt (39) und andererseits über den Widerstand (17) an der Netzgleichspannung liegen.

4. Schaltungsanordnung nach Anspruch 2 für einen Synchronmotor mit in Stern geschalteter Ankerwicklung, dadurch gekennzeichnet, daß jeweils zwei Halbleiterschalter (41,44 bzw. 42,45 bzw. 43,46) in Reihe geschaltet sind und an dem Verbindungspunkt (36-38) jeweils eine Wicklungsphase (u,v,w) der Ankerwicklung (10) angeschlossen ist und daß die der Zahl der Wicklungsphasen (u,v,w) entsprechende Anzahl paralleler Reihenschaltungen von jeweils zwei Halbleiterschaltern (41-46) über den Widerstand (17) an die Netzgleichspannung gelegt sind.

5. Schaltungsanordnung nach einem der Ansprüche 1 - 4, dadurch gekennzeichnet, daß als Differenzbildner (18-20;51-56) ein Differenzverstärker (23) und als Halbleiterschalter (14-16;41-44) ein Leistungs-MOSFET (22) verwendet wird und daß das Referenzsignal an dem invertierenden Eingang (231) des Differenzverstärkers (23) und das zugeordnete Schaltsignal (S1-S3;S1-S6) an dem nicht invertierenden Eingang (232) des Differenzverstärkers (23) gelegt ist.

6. Schaltungsanordnung nach einem der Ansprüche 1 - 5, dadurch gekennzeichnet, daß jedes Schaltsignal (S1-S3) aus periodischen Rechteckimpulsen mit unter einem Winkel kleiner 90° ansteigenden bzw. abfallenden Flanken zusammengesetzt ist und daß die Anstiegsflanken der Rechteckimpulse des Schaltsignals (S1-S3), das der in der Stromführung nachfolgenden Wicklungsphase (u,v,w) der Ankerwicklung (10) zugeordnet ist, und die Abfallflanken der Rechteckimpulse des Schaltsignals (S1-S3), das der in der Stromführung vorausgehenden Wicklungsphase (u,v,w) zugeordnet ist, einander zeitlich überlappen.

7. Schaltungsanordnung nach einem der Ansprüche 1 - 6, dadurch gekennzeichnet, daß die Amplituden der Schaltsignale (S1-S3) drehzahlabhängig begrenzt sind.

8. Schaltungsanordnung nach Anspruch 7, dadurch gekennzeichnet, daß die Drehzahlbegrenzung in Differenzbildnern (31-33) erfolgt, denen einerseits jeweils ein Schaltsignal (S1'-S3') und andererseits das Ausgangssignal eines Drehzahlreglers (34) zugeführt sind.

9. Schaltungsanordnung nach Anspruch 8, dadurch gekennzeichnet, daß der Drehzahlregler (34) ein P- oder PI-Regler ist, dem die Differenz aus der am Rotor (11) gemessenen Istdrehzahl (nᵢₛₜ) und einer Solldrehzahl (nₛₒₗₗ) zugeführt ist.

10. Schaltungsanordnung nach Anspruch 9, dadurch gekennzeichnet, daß die Istdrehzahl (nᵢₛₜ ) aus den Schaltsignalen (A1-A3 ) abgeleitet ist.

## Claims

1. Circuit arrangement for operating a synchronous motor having a multi-phase armature winding (10) from a DC network, having a switching device (13) for successive connection of the winding phases of the armature winding to the network DC voltage, which switching device (13) has a plurality of semiconductor switches (14, 15, 16) which are assigned to the individual winding phases, and having a commutation device (29) in order to drive the semiconductor switches with switching signals in the corrector sequence to correspond to the rotor rotation position of the synchronous motor, characterized in that an analogue subtracter (18-20; 51-56) is connected upstream of each control input (G) of the semiconductor switches (14-16; 41-44), to which subtracter (18-20; 51-56) there are supplied on the one hand the switching signal (S1-S3; S1-S6) assigned to the semiconductor switch (14-16; 41-46) and on the other hand a reference signal which is derived from the phase total current of the armature winding (10), and in that the driving of the semiconductor switches (14-16; 41-46) by the subtracters (18-20; 51-56) is designed such that the semiconductor switches (14-16; 41-46) are completely switched on as long as the amplitude of the switching signal (S1-S3; S1-S6) is greater than the amplitude of the reference signal.

2. Circuit arrangement according to Claim 1, characterized in that the reference signal is formed by suitable amplification from the voltage drop picked off from a resistor (17) through which the phase total current of the armature winding (10) flows.

3. Circuit arrangement according to Claim 2 for a synchronous motor whose armature winding, which is connected in star, has a star point which is passed out to the exterior, characterized in that in each case one semiconductor switch (14-16) is connected in series with one winding phase (u, v, w) of the armature winding (10), and in that the parallel series circuits are connected to the network DC voltage on the one hand via the star point (39) and on the other hand via the resistor (17).

4. Circuit arrangement according to Claim 2 for a synchronous motor having an armature winding connected in star, characterized in that in each case two semiconductor switches (41, 44 and 42, 45 and 43, 46 respectively) are connected in series and in each case one winding phase (u, v, w) of the armature winding (10) is connected to the junction point (36-38), and in that the number of parallel series circuits of in each case two semiconductor switches (41-46) corresponding to the number of winding phases (u, v, w) are connected to the network DC voltage via the resistor (17).

5. Circuit arrangement according to one of Claims 1 - 4, characterized in that a differential amplifier (23) is used as the subtracter (18-20; 51-56) and a power MOSFET (22) is used as the semiconductor switch (14-16; 41-44), and in that the reference signal is applied to the inverting input (231) of the differential amplifier (23), and the associated switching signal (S1-S3; S1-S6) is applied to the non-inverting input (232) of the differential amplifier (23).

6. Circuit arrangement according to one of Claims 1 - 5, characterized in that each switching signal (S1-S3) is composed of periodic square-wave pulses having edges which rise and fall respectively at an angle of less than 90°, and in that the rising edges of the square-wave pulses of the switching signal (S1-S3) which is assigned to that winding phase (u, v, w) of the armature winding (10) which is next in the current supply, and the falling edges of the square-wave pulses of that switching signal (S1-S3) which is assigned to the winding phase (u, v, w) which preceeds in the current supply overlap one another in time.

7. Circuit arrangement according to one of Claims 1 - 6 characterized in that the amplitudes of the switching signals (S1-S3) are limited as a function of the rotation speed.

8. Circuit arrangement according to Claim 7, characterized in that the rotation speed limiting is carried out in subtracters (31-33) to which in each case one switching signal (S1'-S3') is supplied on the one hand, and the output signal of a rotation speed regulator (34) is supplied on the other hand.

9. Circuit arrangement according to Claim 8, characterized in that the rotation speed regulator (34) is a P-regulator or PI regulator to which the difference between the actual rotation speed (n_{act}) measured on the rotor (11) and a required rotation speed (n_{req}) is supplied.

10. Circuit arrangement according to Claim 9, characterized in that the actual rotation speed (n_{act}) is derived from the switching signals (A1-A3).

## Revendications

1. Circuit d'exploitation d'un moteur synchrone à enroulement d'induit (10), polyphasé, relié à un réseau de tension continue, comprenant un dispositif de commutation (13) pour brancher successivement les phases de l'enroulement d'induit à la tension continue du réseau, comprenant plusieurs commutateurs semi-conducteurs (14, 15, 16) associés aux différents enroulements de phase et un dispositif de commutation (29) pour commander successivement les commutateurs semi-conducteurs avec des signaux de commutation en concordance avec la position de rotation du rotor du moteur synchrone, circuit caractérisé en qu'en amont de chaque entrée de commande (G) des commutateurs semi-conducteurs (14-16 ; 41-44) il y a un générateur de différence (18-20 ; 51-56) analogique, recevant d'une part le signal de commutation (S1-S3 ; S1-S6) associé aux commutateurs semi-conducteurs (14-16 ; 41-46) et d'autre part un signal de référence déduit du courant de somme des phases de l'enroulement d'induit (10), et en ce que la commande des commutateurs semi-conducteurs (14-16 ; 41-46) est réalisée par le générateur de différence (18-20 ; 51-56) pour que les commutateurs semi-conducteurs (14-16 ; 41-46) soient complètement passant aussi longtemps que l'amplitude du signal de commutation (S1-S3 ; S1-S6) est supérieure à l'amplitude du signal de référence.

2. Circuit selon la revendication 1, caractérisé en ce que le signal de référence est pris sur une résistance (17) traversée par le courant de somme des phases de l'enroulement d'induit (10), et amplifié de manière appropriée.

3. Circuit selon la revendication 2 pour un moteur synchrone dont le point étoile est relié à l'extérieur, de l'enroulement d'induit branché en étoile, caractérisé en ce que chaque fois un commutateur semi-conducteur 14-16 est branché en série avec un enroulement de phase (u,v,w) de l'enroulement d'induit (10) et les circuits-série parallèles sont reliés à la tension continue du réseau d'une part par le point étoile (39) et d'autre part par la résistance (17).

4. Circuit selon la revendication 2 pour un moteur synchrone à enroulement d'induit en étoile, caractérisé en ce que chaque fois deux commutateurs semi-conducteurs (41, 44 ou 42, 45 ou 43, 46) sont branchés en série et chaque phase (u,v,w) de l'enroulement d'induit (10) est reliée au point de jonction (36, 38), et le nombre de circuits-série, parallèles, correspondant au nombre des enroulements de phase (u,v,w,) est relié par chaque fois deux commutateurs semi-conducteurs (41-46) par la résistance (17) à la tension continue du réseau.

5. Circuit selon l'une des revendications 1-4, caractérisé en ce que le générateur de différence (18-20 ; 51-56) est un amplificateur de différence (23) et le commutateur semi-conducteur (14-16 ; 41-44) est un transistor (MOSFET) de puissance (22) et le signal de référence est appliqué à l'entrée inversée (231) de l'amplificateur de différence (23) et le signal de commutation correspondant (S1-S3 ; S1-S6) est appliqué à l'entrée non inversée (232) de l'amplificateur de différence (23).

6. Circuit selon l'une des revendications 1-5, caractérisé en ce que chaque signal de commutation (S1-S3) se compose d'impulsions rectangulaires périodiques ayant des flancs montant et descendant d'un angle inférieur à 90° et les flancs montant des impulsions rectangulaires du signal de commutation (S1-S3) associés à la phase (u,v,w) de l'enroulement d'induit (10) qui est sur le point de conduire le courant, et les flancs descendant des impulsions rectangulaires du signal de commutation (S1-S3) associés à la phase (u,v,w,) de l'enroulement conducteur précédemment, se chevauchent dans le temps.

7. Circuit selon l'une des revendications 1-6, caractérisé en ce que l'amplitude des signaux de commutation (S1-S3) est limitée en fonction de la vitesse de rotation.

8. Circuit selon la revendication 7, caractérisé en ce que la limitation de la vitesse de rotation se fait dans les générateurs de différence (31-33) recevant d'une part un signal de commutation (S1'-S3') et d'autre part le signal de sortie d'un régulateur de vitesse de rotation (34).

9. Circuit selon la revendication 8, caractérisé en ce que le régulateur de vitesse de rotation (34) est un régulateur (P) ou un régulateur (PI) recevant la différence de la vitesse de rotation réelle (n_{réel}) mesurée sur le rotor (11) et une vitesse de rotation de consigne (n_{cons}).

10. Circuit selon la revendication 9, caractérisé en ce que la vitesse de rotation réelle (n_{réel}) est déduite des signaux de commutation (A1-A3).
